# EUROPEAN PATENT APPLICATION

(11) **EP 3 202 978 A1**
(43) Date of publication of application: **09.08.2017**
(21) Application number: 16154301.2
(22) Date of filing: 04.02.2016
(51) Int. Cl.: D21C 3/02, C08B 15/00, C08B 15/08, D21C 3/26, D21C 11/00, D21H 11/18

(54) **METHOD FOR PRODUCING NANOCRYSTALLINE CELLULOSE FROM LINTER**

(71) Applicant: Kaya, Muhammet, Istanbul (TR)
(72) Inventor: Yoruc Hazar, Afife Binnaz, 34210 Istanbul (TR); Güner, Mehmet Bugra, 34210 Istanbul (TR)
(74) Representative: Mutlu, Aydin

(57) **Abstract**

The present invention relates to a method for manufacturing of nanocrystalline cellulose from linter with high efficiency. The method of the invention also provides nanocrsytalline cellulose with high crystallinity. In this respect, the method of nanocrystalline cellulose from linter comprises the steps of: pulping, bleaching, acid hydrolysis, neutralization and lyophilization.

## Description

### Technical Field of the Invention

The present invention relates to a method for producing nanocrsytalline cellulose from linter. More specifically, the invention is pertaining to a method for producing nanocrsytalline cellulose comprising use of linter as a starting material, and applying pulping and bleaching prior to hydrolysis of linter.

### Background of the Invention

There has been many studies conducted on the manufacture of nanocrsytalline cellulose (NCC) since 1930s till today which are still ongoing. The researchers have been used several starting materials in the production of NCC such as raw materials comprising cellulose including wood pulp, linter, sesame, rice, corn husk, bamboo as well as bacteriological resources.

Cotton linter which is a short fibre, is an important by-product of the textile industry. The linter remains attached to the seed coat after the regular cotton fibers are extracted in the ginning process. An additional mechanical process is required to remove the linter on the seed. The amount of linter produced worldwide is around 2.5 million metric tons and a 42 million metric tons of cotton linter is produced in 2010 *(*Morais, J.P.S., Rosa, M. F., Filho, M. M. S., Nascimento, L. D., Nascimento, D. M., Cassales, A. R., "Extraction and characterization of nanocellulose structures from raw cotton linter", Carbohydrate Polymers 91 (2013) 229-235). In that regard, linter can be an important starting product having an easy accessibility for producing nanocrystalline cellulose. There are many industrial products in the market which are made from linter including absorbent cotton, special papers, cellulose nitrate and acetate.

It is known that many resources have been used for the manufacturing of nanocellulose crystals in the prior art. For instance, Roman et. al. used bacterial cellulose; Hassan et al. used sugar cane bagasse kraft pulp while Favier et. al. studied on cellulose tunic *(*Roman, M., Winter, W. T., "Effect of Sulfate Groups from Sulfuric Acid Hydrolysis on the Thermal Degradation Behavior of Bacterial Cellulose, Biomacromolecules 2004, 5, 1671-1677*;* Bras, J., Hassan, M.L., Bruzesse, C., Hassan, E. A., El-Wakil, N. A., Dufresne, A., "Mechanical, barrier, and biodegradability properties of bagasse cellulose whiskers reinforced natural rubber nanocomposites" Industrial Crops and Products 32 (2010) 627-633*;* Favier, V., Chanzy, H., Cavaillé, J.Y, "Polymer Nanocomposites Reinforced by Cellulose Whiskers" Macromolecules 1996,28, 6365-6367*).* Morais et. al., on the other hand, have succeeded to produce NCC from cotton linter. The method used by Morais et. al. involves the direct hydrolysis of NCC with sulfuric acid *(*Morais, J.P.S., Rosa, M. F., Filho, M. M. S., Nascimento, L. D., Nascimento, D. M., Cassales, A. R., "Extraction and characterization of nanocellulose structures from raw cotton linter". Carbohydrate Polymers 91 (2013) 229-235*).*

The use of acid hydrolysis for the production of NCC has started to be used in 1940s. Initially, sulfuric acid was used for NCC production, 22% wt. of sulfuric acid solutions were preferred. Nickerson et. al. in 1947 and Ranby et. al. in 1951 have produced NCC from linter via boiling for long time periods with an efficiency of 30-40% *(*Nickerson, R.F., Habrle, J.A., "Cellulose Intercrystalline Structure, Industrial and Engineering Chemistry, Vol. 39, No. 11*;* Ranby, B.G., "Fibrous Macromolecular Systems Cellulose and Muscle" The Colloidal Properties of Cellulose Micelles, (1951) 158-164*).* In 1953, Mukherjee et. al. have succeeded to produce NCC suspensions displaying good distribution in an aqueous medium by using 65% wt. H₂SO₄ by weight *(*Mukherjee SM, Woods HJ., "X-ray and electron microscope studies of the degradation of cellulose by sulphuric acid", Biochim Biophys Acta. 1953 Apr; 10(4):499-511*).* However, in this study the efficiency of the reaction hardly reaches to 30%. The researchers have begun using sulfuric acid having 65% v/v concentration since this study because it has been revealed that the treatments on the sulphate groups on the NCC provides the electrostatic stability thereof.

In consideration of the studies conducted in the prior art, there exists still a need in the related technical field for a process to produce NCC from linter with high efficiency. In this regard, the inventors have conducted studies on the hydrolysis of linter in order to obtain nanocrystalline cellulose. However, they found out that the linter is burned during the reaction and the majority of the raw material is lost at the end. This, in turn, results in a low efficiency of the process, and of low quality of the end product. To this end, the aim of the present invention is to provide an efficient process for producing NCC from linter without losing the starting material and the provision of NCC having the required features including desired particle size and crystallinity.

The inventors have surprisingly observed that the pulping and bleaching of linter protects linter from burning during acid hydrolysis and maintains the amount of cellulose in the raw material. Accordingly, the present invention is related to a method for producing NCC from linter and said method comprises a step of pulping and bleaching prior to acid hydrolysis. In another aspect, the current invention is related to a process for producing NCC from linter where it comprises the steps of: pulping, bleaching, acid hydrolysis, neutralization, and lyophilization.

### Brief Description of the Invention

The present invention is related to a method for producing NCC from linter where said method comprises basically the following steps:
- pulping and bleaching,
- acid hydrolysis,
- neutralization, and
- lyophilization.

In a further embodiment of the invention, the method for producing NCC from linter comprises the following steps:
- the pulping comprises treatment of linter with NaOH,
- the bleaching comprises treatment of linter with NaOH and H₂O₂, and
- the acid hydrolysis comprises treatment of the linter solution with sulfuric acid.

In a preferred embodiment of the invention, the pulping comprises treatment of linter with 6% to 30% (w/v) NaOH.

In a more preferred embodiment of the invention, the pulping comprises treatment of linter with NaOH for 10 to 30 hours.

The method of the invention, in another embodiment of the invention, the bleaching comprises the treatment of the pulped linter with 0.5% to 3% v/v H₂O₂ in addition to 1% to 5% w/v NaOH.

Accordingly, the bleaching can be performed under magnetic stirring at 80°C to 100°C.

In a further embodiment, the bleaching step is performed for 1-3 hours.

In a preferred embodiment of the invention, the bleaching step is performed with a solid/liquid weight ratio of 1:10 to 1:30.

In another embodiment of the invention, the acid hydrolysis is performed with treatment of pulped and bleached linter using 50% to 70% (v/v) sulfuric acid.

In a further embodiment of the invention, the acid hydrolysis is performed at a temperature of 40°C to 50°C for 3 to 7 hours.

In an embodiment of the invention, the neutralization, after the hydrolysis step, is performed by centrifugation.

### Detailed Description of the Invention

The method for producing NCC from linter disclosed in the present invention comprises the steps as mentioned above. When the acid hydrolysis is directly applied to raw linter, it is observed that linter turns to black which is an indication of over-hydrolysis. Therefore, prior to acid hydrolysis, the pulping and bleaching steps are applied to the raw material. Said process is performed in a basic medium and enables not only the protection of linter from burning but also removes the impurities that could be present in the raw linter and which may affect negatively the quality of the end product.

The first process step that can be applied on the linter is the size reduction thereof. Accordingly, the linter is fragmentized by a hydromechanical treatment and the particle size of linter is reduced.

The pulping step involves the treatment of linter with a basic agent such as NaOH. Said process is carried out preferably under room temperature in a magnetic stirrer. The pulping step plays an important role in order to remove the impurities which are soluble in basic medium. In this regard, the concentration of the basic agent and the duration of the treatment are important parameters in terms of the efficiency of the process. To this end, in an embodiment of the invention, the concentration of NaOH used in the pulping step can be 6% to 30%, preferably, 10% to 30% (w/v). In a more preferred embodiment of the invention, the concentration of NaOH is 25% (w/v). The other parameter for the pulping step is the duration of the treatment. Accordingly, duration of the treatment is 10 to 30 hours, and more preferably 15 to 20 hours. In a more preferred embodiment of the invention, the duration of the pulping step is about 18 hours.

Another problem observed after the pulping step is that the pulped linter turns to a dark brown colour. In order to eliminate this problem, it is required a bleaching step for cleaning the pulped linter with the aim of obtaining white linter as an end product. This step also aims to remove further impurities in the pulped linter prior to acid hydrolysis since the impurities may result in a low quality end product. At this stage, there are many parameters which could play a role in the efficiency of the process including the concentration of the bleaching agent and the duration of the treatment. Hydrogen peroxide is considered less hazardous compared to other agents that could be used in the bleaching; however, the concentration thereof is to be adjusted in a way that the agent would only remove the impurities without harming the structure of cellulose. In this respect, in an embodiment of the invention, the bleaching agent is preferably hydrogen peroxide and its concentration in bleaching is 0.5% to 3% v/v of the process bath. In a more preferred embodiment of the invention, the concentration of the hydrogen peroxide is 1.5% v/v.

Said bleaching process further comprises the use of NaOH in addition to hydrogen peroxide as a wetting agent. The concentration of NaOH used in the bleaching step can be within the range of 1% to 5% (v/v). In a more preferred embodiment of the invention, the concentration of NaOH is about 3% (w/v). The bleaching can be performed under magnetic stirring at 95°C for 2 hours. The minimum amount of liquid is preferred to be used to reduce the high costs due to the cost of the hydrogen peroxide. This also permits the enhancement of the efficiency of the process of the invention. Accordingly, the solid/liquid weight ratio in the bleaching process is preferably 1:10 to 1:30, more preferably 1:20.

After the completion of bleaching step, the whitened linter pulp becomes ready for to be hydrolysed. The aim of the hydrolysis is to break the amorphous parts which form the structure of the cellulose fibres. In this way, the crystal phase remains in the structure. The hydrolysis step involves the treatment of the bleached linter with sulfuric acid. Again, at this stage, the concentration of the sulfuric acid, the duration of the treatment and the temperature are the parameters which affect the efficiency of the process. It is very important to create an effective acidic medium in order to provide a homogenous and efficient decomposition. In the meanwhile, it is also important to control the acidic medium to prevent the over-hydrolysis. According to this, in an embodiment of the invention, the concentration of the sulfuric acid used in the acid hydrolysis is 40% to 80% (v/v). In a more preferred embodiment of the invention, the concentration of the sulfuric acid is 50% to 70% (v/v). Most preferably, the sulfuric acid concentration is 55% to 60% (v/v). The acid hydrolysis is preferably performed at a temperature 40°C to 50°C, more preferably the temperature of the hydrolysis is 45°C. The optimum duration of the hydrolysis is required for the complete decomposition of the linter. Accordingly, the bleached linter is treated with sulfuric acid for 3 to 7 hours, preferably about 5 hours.

To stop the hydrolysis reaction, preferably ultra-pure water is added to the reaction medium. The ratio of ultra-pure water used for neutralization is 1:30 to 1:60 (w/v). In a preferred embodiment of the invention, said ratio is preferably 1:50 (w/v).

Then, the obtained suspension is kept in the ultrasonic bath with the aim of preventing the agglomeration formation. The duration of the ultrasonic bath is 60 to 15 min, preferably 50 to 20 min, and more preferably is about 30 min.

After the hydrolysis reaction is terminated, the cellulose in the suspension must be isolated. The widely known method in the prior art to isolate the cellulose in the suspension is dialysis. However, dialysis has several disadvantages and it needs to be applied in large scale. Said operation requires high consumption of water to work in large scales. In dialysis, biopolymer based membranes are used which create later on organic pollution. Another disadvantage of dialysis is that the operation requires long time, around 1 week to terminate and this, in turn, elongates the whole process and decreases the efficiency of the process. For these reasons, in an embodiment of the invention, the method comprises the step of neutralization where said neutralization is performed by centrifugation.

According to this, in order to isolate decomposed linter, the obtained suspension is centrifuged. More particularly, the whole suspension is initially centrifuged at 7000 to 14000 rpm, preferably at about 9000 rpm. The centrifugation is performed 5 to 10 min, preferably 10 min at a temperature of -4°C.

The neutralization of the cellulose suspension involves the repetitive centrifugation and washing steps which continue until the final pH of the supernatant reaches to 5.5 to 6.0. Accordingly, the suspension is centrifuged and deionized water is added. The new suspension is again centrifuged, the supernatant is filtered and the pH thereof is measured. The neutralization step is finalized when the pH of the supernatant is 5.5 to 6.0.

In order to isolate the nanocrystalline cellulose formed, the precipitate of NCC is first frozen in a deep freezer at -20°C for 24 hours. Then, it is dried in a freeze-drier at -80°C for 24 to 48 hours.

After this step, it is unexpectedly found that NCC in dry powder form is obtained with higher efficiency, i.e. with an amount of 75% to 80% by weight of the dry linter.

### Example

### Performing the Method of the Invention

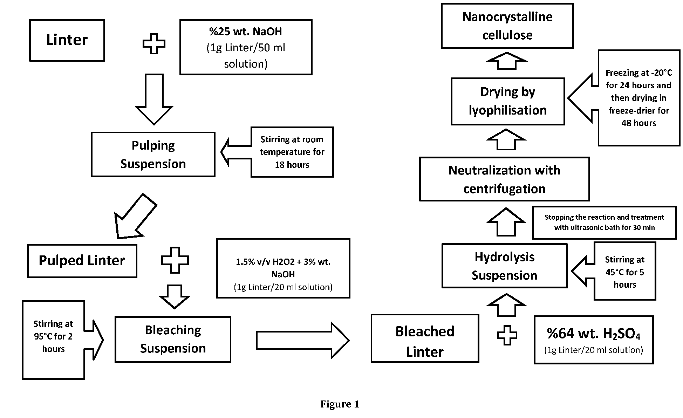

The method exemplified herein below is shown in detail in the flow diagram of Figure 1.

### 1. Hvdromechanical Process and Pulpinn Stet

First, cut cotton linter is treated mechanically by a hydromechanical process in order to reduce the size of the linter. Then, in the pulping step, 50 mL 25% (w/v) NaOH is used to treat 1 g of linter. The treatment is performed at room temperature in a magnetic stirrer for 18 hours in the solution described. At the end of the process, the liquid phase is filtered by a sieve and is washed with pure water on the same sieve.

### 2. Bleaching Step

20 mL 1.5% v/v H₂O₂ (hydrogen peroxide) and 3% NaOH (w/v) with deionized water are used in the bleaching step for bleaching 1 g dry linter which is already pulped. The prepared solution is added on the pulped and washed linter. This treatment is performed under magnetic stirring at 90°C for 2 hours. At the end of the treatment, the suspension is filtered by the aid of a sieve and washed with deionized water.

### 3. Hydrolysis Step

This step comprises the hydrolysis of bleached linter, termination of the hydrolysis reaction and treatment of the suspension in an ultrasonic bath. Accordingly, 20 mL 64% wt. H₂SO₄ is used to treat 1 g dry linter. This treatment is performed under magnetic stirring at 45°C for 5 hours. The reaction is stopped by the addition of 50 mL ultra-pure water for 1 g dry linter (pH: 5.88). The suspension obtained is kept in an ultrasonic bath for 30 min. At the end of the process, the suspension is left overnight for the formation of phase separation and precipitation. The next day, the suspension has an obvious phase separation leaving the clear acidic solution on the top and the acidic nanocrystalline cellulose deposits at the bottom. At this stage, the supernate is decanted. Then, the precipitate at the bottom and the acidic solute suspension is transferred to centrifuge tubes.

### 4. Neutralization Step

The suspension is centrifuged for the precipitation and neutralisation thereof. The suspension as a whole is first centrifuged at 9000 rpm at -9°C for 10 min. Then, the sediment and the supernatant can be separated. The supernatant in the tube is decanted and the pH thereof is measured. At this stage, the pH is often measured -0.1. Then, the precipitate is washed with a total volume of 50 mL deionized water repetitively until the final pH of the upper phase is above 5.5.

### 5. Lyophilisation Step

At this step, nanocrystalline cellulose is dried by freezing and nanocrystalline in powder form is obtained. At this stage, NCC precipitates which were previously neutralized, are taken into plastic containers in order to dry them by freezing (lyophilization). NCC precipitates are first frozen in a deep freezer at - 20°C for 24 hours and then is dried in a freeze-drier by being frozen at - 80°C for 48 hours. Finally, NCC sample in powder form is obtained at a ratio of 75% by weight of the dry linter.

### Characterization of the NCC Obtained

### Efficiency of the Method of the Invention

The efficiency of the method of the invention is measured by the percentage of the NCC sample obtained from linter. Said measurement is performed by the ratio of the difference between the weights of the dry sample to be processed from that of the sample after being processed to the initial weight of the dry sample. The table given below shows the efficiency of the sample processed by the method of the invention compared to the other studies in the related technique (Table 1).

**Table 1. Efficiency of NCC sample obtained from linter with the present invention as compared to the prior art**

| | **Efficiency %** |
|---|---|
| **NCC Sample obtained with the method of the invention** | 75-80 |
| Tang et. al. (1) | 40,4 |
| Pirani et. al. (2) | 54,14-80,1 |
| Bitinis et. al. (3) | 20 |
| Chan et. al. (4) | 40 |

| | |
|---|---|
| (1) Tang, Y., Yang, S., Zhang, N., Zhang J.. "Preparation and characterization of nanocrystalline cellulose via low-intensity ultrasonic-assisted sulfuric acid hydrolysis."Cellulose 21.1 (2014): 335-346. (2) Pirani, S. Abushammala, H.M.N. and Hashaikeh, R., (2013). "Preparation and characterization of electrospun PLA/nanocrystalline cellulose-based composites", Journal of Applied Polymer Science, 130: 3345-3354. (3) Bitinis, N. Verdejo, R. Bras, J. Fortunati, E. Kenny, J.M. Torre, L. ve Lopez-Manchado, M.A., (2013). "Poly (lactic acid)/natural rubber/cellulose nanocrystal bionanocomposites Part I. Processing and morphology", Carbohydrate polymers, 96: 611-620. (4) Chan, H. C., Chia, C. H., Zakaria, S., Ahmad, I., Dufrensne, A. "Production and characterisation of cellulose and nano-crystalline cellulose from kenaf core wood." BioResources 8.1 (2012): 785-794. | |

### Electron Microscopy

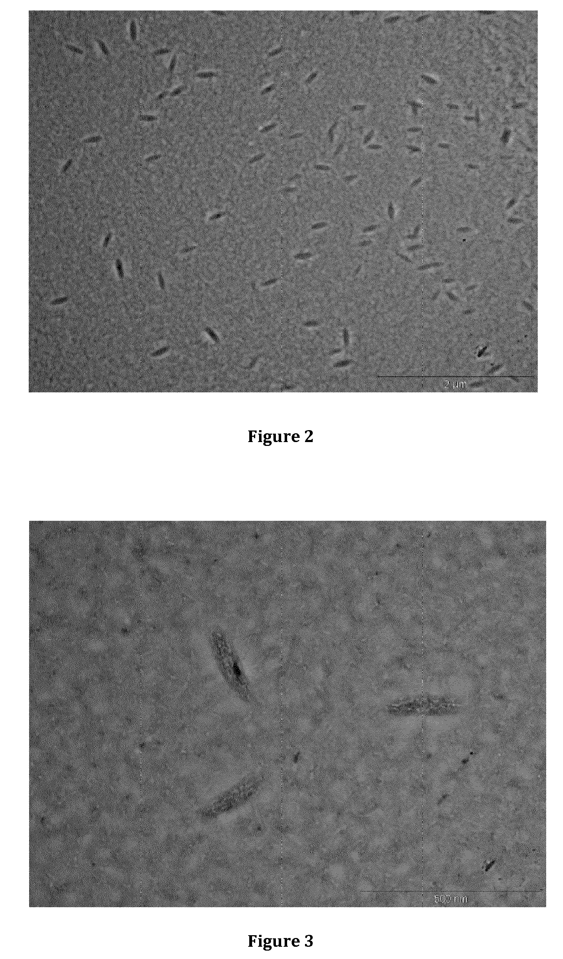

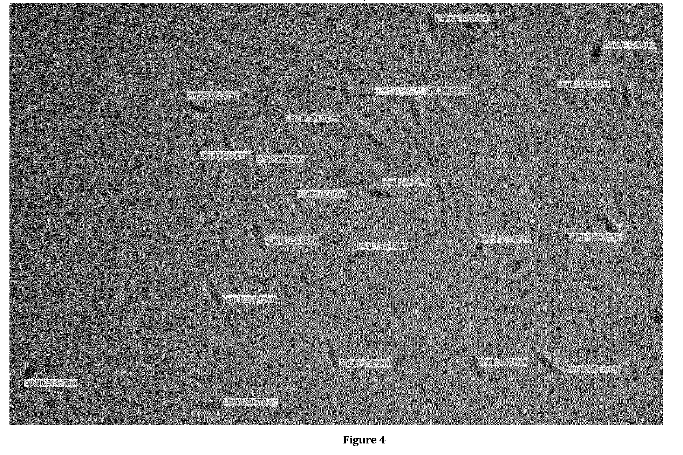

The morphology of cotton linter was analysed by Transmission Electron Microscopy (TEM). The dimensions of the nanocrystalline cellulose obtained from the linter were measured. In order to perform the analysis, 0.1 % of NCC suspension is processed in ultrasonic homogenizator for 5 min and 1 drop of the suspension is dropped with Pasteur pipette on the 100 mesh carbon grid covered with Formvar. The sample is dried at room temperature and images are taken at different magnifications and the TEM analysis is performed (Figure 2, 3 and 4). The dimensions of the crystals determined in the image taken in TEM analysis at a magnification of 20.000x are presented in Table 2.

**Table 2. The dimensions of the crystals on the image at a magnification of 20.000x of the NCC sample obtained from linter**

| | **Linter - L4** | |
|---|---|---|
| | Length [nm] | Width [nm] |
| | 108.43 | 2.92 |
| | 160.74 | 2.97 |
| | 174.99 | 3.11 |
| | 188.75 | 3.23 |
| | 202.3 | 3.32 |
| | 205.75 | 6 |
| | 208.12 | 6.76 |
| | 214.78 | 7.88 |
| | 216.91 | 9.01 |
| | 232.09 | 16.33 |
| | 234.77 | 58.91 |
| | 240.93 | 61.45 |
| | 240.98 | 64.69 |
| | 251.91 | 64.69 |
| | 253.84 | 67.16 |
| | 253.93 | 71.44 |
| | 266.18 | 75.19 |
| | 269.45 | 75.73 |
| | 274.37 | 77.99 |
| | 278.84 | |
| **Mean Values** | 223.903 | 35.72526 |

| **L/D Values** | | |
|---|---|---|
| Largest Length/Smallest Width | 95.49315068 | |
| Smallest Length / Largest Width | 1.39030645 | |
| Largest Length / Largest Width | 3.575330171 | |
| Smallest Length / Smallest Width | 37.13356164 | |
| **Mean Length / Mean Width** | 6.267357612 | |

### X-Ray Diffractogram

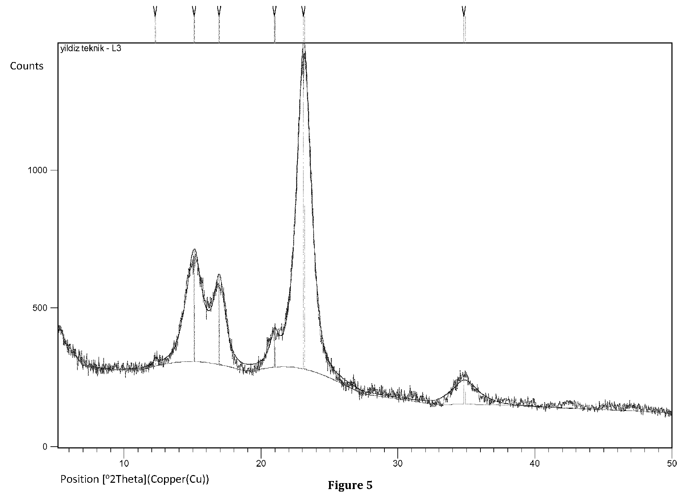

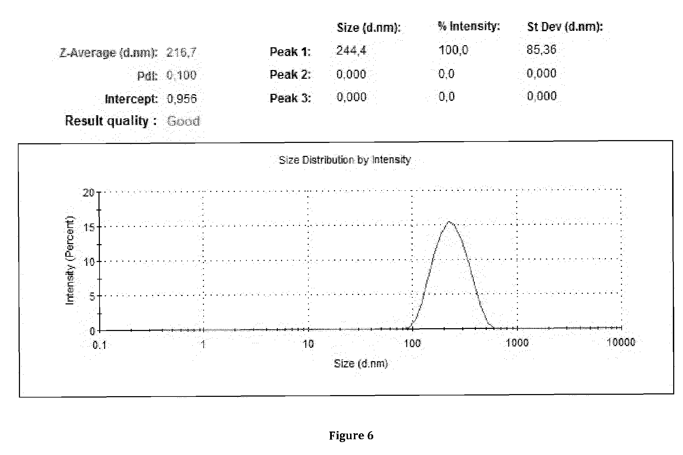

The X-ray diffraction of the materials was measured in a device branded PG. The diffractograms of nanocrsytalline cellulose had peaks related to the crystallographic plans of cellulose in accordance with the Bragg angles *(2θ)*. The values of 2θ used in the measurement are 5°-50°, at a speed of 1°/min. As the cathode, copper having Kα value of 1.54 Å is used. The spectrum diagram from the XRD analysis of the NCC sample obtained from linter is shown in Figure 5. The table 3 below shows a comparison of the peaks observed in the XRD analysis of the studies performed on NCC and that of the NCC sample from the method of the invention.

**Table 3. Comparison of the XRD spectrum of the NCC sample obtained from linter with the data in the prior art**

| | **2θ Value of the 1^{st} peak** | **2θ Value of the 2^{nd} peak** | **2θ Value of the 3^{rd} peak** | **2θ Value of the 4^{th} peak** |
|---|---|---|---|---|
| **Results obtained from the sample L3** | 15° | 17° | 23° | 35° |
| Mendes et. al. (2015) (5) | 16° | - | 23° | 35° |
| Liu et. al. (2014) (6) | 14° | 16° | 23° | 34° |
| Xu et. al. (2013) (7) | 16° | - | 23° | 35° |
| Pirani et. al. (2013) (2) | 15° | 17° | 23° | 35° |
| Morais et. al. (2013) (8) | 15° | 19° | 26° | - |

| | | | | |
|---|---|---|---|---|
| (5) Mendes, C.A.d.C. Ferreira, N.M.S. Furtado, C.R.G. ve de Sousa, A.M.F., (2015). "Isolation and characterization of nanocrystalline cellulose from corn husk", Materials Letters, 148: 26-29. (6) Xu, X. Liu, F. Jiang, L. Zhu, J.Y. Haagenson, D. ve Wiesenborn, D.P., (2013). "Cellulose nanocrystals vs. cellulose nanofibrils: a comparative study on their microstructures and effects as polymer reinforcing agents", ACS Appl Mater Interfaces, 5: 2999-3009. (7) Liu, Y. Wang, H. Yu, G. Yu, Q. Li, B. ve Mu, X., (2014). "A novel approach for the preparation of nanocrystalline cellulose by using phosphotungstic acid", Carbohydr Polym, 110: 415-422. (8) Morais, J.P.S. de Freitas Rosa, M. Nascimento, L.D. do Nascimento, D.M. ve Cassales, A.R., (2013). "Extraction and characterization of nanocellulose structures from raw cotton linter", Carbohydrate polymers, 91: 229-235 | | | | |

The percentage crystallinity of the NCC sample obtained from the linter is measured 98.98% after the analysis of the raw data obtained with the Segal method as a result of the XRD analysis. The results in respect of the crystallinity of the other studies performed on NCC samples are presented in the Table 4 below.

**Table 4. Comparison of the percentage crystallinity of the NCC sample from linter with the data obtained from the studies in the prior art**

| **Sample** | **% Crystallinity** |
|---|---|
| **NCC sample obtained from linter** | 98.98 |
| Morais et. al. (8) | 90.45 |
| Bitinis et. al. (3) | 91.6 |
| Pirani et. al. (2) | 90 |
| Tang et. al. (1) | 90.38 |
| Chan et. al. (4) | 75 |

| | |
|---|---|
| (8) Morais, J.P.S. de Freitas Rosa, M. Nascimento, L.D. do Nascimento, D.M. ve Cassales, A.R., (2013). "Extraction and characterization of nanocellulose structures from raw cotton linter", Carbohydrate polymers, 91: 229-235. (3) Bitinis, N. Verdejo, R. Bras, J. Fortunati, E. Kenny, J.M. Torre, L. ve López-Manchado, M.A., (2013). "Poly (lactic acid)/natural rubber/cellulose nanocrystal bionanocomposites Part I. Processing and morphology", Carbohydrate polymers, 96: 611-620. (2) Pirani, S. Abushammala, H.M.N. and Hashaikeh, R., (2013). "Preparation and characterization of electrospun PLA/nanocrystalline cellulose-based composites", Journal of Applied Polymer Science, 130: 3345-3354. (1) Tang, Y., Yang, S., Zhang, N., Zhang J.. "Preparation and characterization of nanocrystalline cellulose via low-intensity ultrasonic-assisted sulfuric acid hydrolysis."Cellulose 21.1 (2014): 335-346. (4) Chan, H. C., Chia, C. H., Zakaria, S., Ahmad, I., Dufresne, A. "Production and characterisation of cellulose and nano-crystalline cellulose from kenaf core wood." BioResources 8.1 (2012): 785-794. | |

### The DLS Analysis of the NCC Sample Obtained From Linter

0.1% NCC suspension is processed in the ultrasonic homogenizator for 5 min. and the sample is then analysed in a Malvern zetasizer in a measurement cuvette coded DTS 1070. The result of the analysis is shown in Figure 5. Morais et. al. measured the mean particle size 179.3 nm as a result of the DLS analysis. The result of the DLS analysis of the NCC sample obtained from linter are further presented in detail in the Table 5 below.

**Table 5. Results of the DLS analysis of the NCC sample obtained from linter**

| **The Particle Dimension Analysis of the NCC Sample Obtained From the Linter** |
|---|
| The part having a particle size below **91.28** nm is **0.**1% of the total sample |
| The part having a particle size below **105.**7 nm is **1.5**% of the total sample |
| The part having a particle size below **122,4** nm is **8.8**% of the total sample |
| The part having a particle size below **164,2** nm is **19.8**% of the total sample |
| The part having a particle size below **190,1** nm is **33.7%** of the total sample |
| The part having a particle size below **220,2** nm is **49.1**% of the total sample |
| The part having a particle size below **255** nm is **64.1**% of the total sample |
| The part having a particle size below **295,3** nm is **77.1**% of the total sample |
| The part having a particle size below **342** nm is **86.8**% of the total sample |
| The part having a particle size below **396,1** nm is **92.8**% of the total sample |
| The part having a particle size below **458,7** nm is **95.5**% of the total sample |
| The part having a particle size below **531,2** nm is **the whole** of the total sample |

According to the TEM images, the ranges of the length (L), diameter (D) and ratio of L/D are given below:
NCC Sample L4
L: 108.43 - 278.84 nm
D: 2.92 - 77.99 nm
L/D: 1.39 - 95.49

As can be seen from the information given above, the experiments conducted on the nanocrystalline cellulose prepared by the method of the invention show that the end-product is in line with the other NCCs known in the art in terms of XRD analysis. On the other hand, the percentage crystallinity of the NCC obtained from linter with the method of the invention is the highest among all the other NCCs in the prior art (Table 4). This is a demonstration of the method of the invention in the way that said method breaks the amorphous part of the cellulose without harming the crystals (Table 3). Furthermore, in terms of efficiency, the method of the invention is among the most efficient methods compared to other processes for obtaining NCC in state of the art (Table 1). The method of the current invention provides NCC having a maximum particle size of 531.2 nm.

## Claims

1. A method for manufacturing of nanocrsytalline cellulose from linter wherein the method comprises the steps of:
• pulping of the linter in the presence of a basic agent, and bleaching of the same in a process bath comprising a peroxide and a basic agent,
• acid hydrolysis of the pulped and bleached linter,
• neutralization,
• lyophilisation, and
• obtaining nanocrsytalline cellulose particles.

2. A method according to claim 1 wherein:
• the pulping comprises treatment of linter with NaOH,
• the bleaching comprises treatment of linter with NaOH and H₂O₂, and
• the acid hydrolysis comprises treatment of the linter solution with sulfuric acid.

3. A method according to claim 1 wherein the pulping step comprises treatment of linter with 6% to 30% (w/v) NaOH.

4. A method according to claim 1 wherein the pulping step comprises the treatment of linter with NaOH for 10 to 30 hours.

5. A method according to claim 1 wherein the bleaching step comprises the treatment of the pulped linter with 0.5% to 3% v/v H₂O₂ in addition to 1% to 5% (w/v) NaOH.

6. A method according to claim 1 wherein the bleaching step is performed under magnetic stirring at 80°C to 100°C.

7. A method according to claim 1 wherein the bleaching step is performed for 1-3 hours.

8. A method according to claim 1 wherein the bleaching step is performed with a solid/liquid weight ratio of 1:10 to 1:30.

9. A method according to claim 1 wherein the acid hydrolysis is performed with treatment of pulped and bleached linter using 50% to 70% (v/v) sulfuric acid.

10. A method according to claim 1 wherein the acid hydrolysis is performed at a temperature of 40°C to 50°C for 3 to 7 hours.

11. A method according to claim 1 wherein the acid hydrolysis is terminated with the addition of ultra-pure water in a ratio of 1:30 to 1:60 (w/v).

12. A method according to claim 1 wherein the acid hydrolysis comprises the treatment of the suspension at the end in an ultrasonic bath for 15 to 60 min.

13. A method according to claim 1 wherein the neutralization is performed by centrifugation.

14. A method according to claim 1 wherein the neutralization performed by centrifugation involves the centrifugation of the suspension at 7000 to 14000 rpm for 5 to 10 min.

15. A method according to claim 1 wherein the lyophilisation involves freezing the NCC precipitate in a deep freezer at -20°C and then in a freeze-drier at -80°C.
